(19) Europäisches Patentamt / European Patent Office / Office européen des brevets

(11) **EP 3 271 426 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
***C09D 5/00*** *(2006.01)*

(21) Anmeldenummer: **16710411.6**

(22) Anmeldetag: **10.03.2016**

(86) Internationale Anmeldenummer:
**PCT/EP2016/055180**

(87) Internationale Veröffentlichungsnummer:
**WO 2016/146484 (22.09.2016 Gazette 2016/38)**

(54) **LACKSYSTEM ENTHALTEND EIN BEWUCHSHEMMENDES METALLOXID UND EINE PYROGENE KIESELSÄURE**

PAINT SYSTEM CONTAINING ANTI-FOULING METAL OXIDE AND FUMED SILICA

SYSTÈME DE VERNIS CONTENANT UN OXYDE MÉTALLIQUE ANTISALISSURES ET DE LA SILICE PYROGÉNÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2015 DE 102015204896**

(43) Veröffentlichungstag der Anmeldung:
**24.01.2018 Patentblatt 2018/04**

(73) Patentinhaber: **Evonik Degussa GmbH 45128 Essen (DE)**

(72) Erfinder:
• **DÜRR, Georg**
  **60386 Frankfurt (DE)**
• **KERN, Magdalena**
  **63755 Alzenau (DE)**
• **MERTSCH, Rüdiger**
  **65189 Wiesbaden (DE)**
• **MEYER, Jürgen**
  **63811 Stockstadt (DE)**
• **MICHAEL, Günther**
  **63791 Karlstein (DE)**
• **TSCHERNJAEW, Juri**
  **63743 Aschaffenburg (DE)**

(56) Entgegenhaltungen:
WO-A1-2008/058894     WO-A1-2013/036746
WO-A1-2014/055418     WO-A1-2014/187769

**Beschreibung**

Die Erfindung betrifft ein Lacksystem enthaltend ein bewuchshemmendes Metalloxid und eine pyrogene Kieselsäure.

Bewuchshemmende Beschichtungen, die Metalloxide enthalten, sind bekannt. Das Hauptproblem bei der Verwendung von Metalloxiden ist deren exponentielle Freisetzung. Dies bedingt einen hohen notwendigen Anteil an Metalloxiden im Lack, wenn man von einer biologisch wirksamen Biozid-Konzentration über den Zeitraum der Lebensdauer der Beschichtung ausgeht.

In US7147921 wird vorgeschlagen die Problematik der Freisetzung durch eine Umhüllung von Kupfer mit einem Siliciumdioxidfilm zu lösen. Tatsächlich ist zu beobachten, dass trotz des Siliciumdioxidfilmes eine unerwünscht rasche Freisetzung des Kupfers erfolgt.

In WO2013/036746 werden Kern-Hülle-Partikel offenbart, deren Kern Kupfer enthält und deren Hülle aus einer porösen Schicht von Siliciumdioxid besteht. Die Hülle wird nasschemisch durch Einsatz einer Natriumsilikatlösung aufgebracht.

In WO2014/187769 werden Kern-Hülle-Partikel vorgeschlagen, deren Hülle im Wesentlichen aus partikulärem Siliciumdioxid mit einer Dicke von 0,1 bis 10 $\mu$m und deren Kerne aus einem bewuchshemmenden Metalloxid mit einem mittleren Partikeldurchmesser von 1 bis 20 $\mu$m bestehen. Die Bindung der Hülle zum Kern ist eine feste Bindung. Bei einer Dispergierung ist keine nennenswerte Trennung dieser Bindung zu beobachten. Die Kern-Hülle-Partikel können hergestellt werden, indem man ein Gemisch der Kern- und Hülle-bildenden Materialien mit einem spezifischen Energieeintrag von 200 bis 2000 kJ/kg in Kontakt bringt. Es wird ausgeführt, dass sich bei einem spezifischen Energieeintrag von weniger als 200 kJ/kg ein physikalisches Gemisch aus Siliciumdioxidpartikeln und Metalloxidpartikeln ausbildet. Es wird ausgeführt, dass dieses Gemisch zu keiner reduzierten Freisetzung des bewuchshemmenden Materiales führt.

Die technische Aufgabe dieser Erfindung war daher, eine Alternative zu den im Stand der Technik bekannten Kern-Hülle-Partikel enthaltenden Lacksystemen bereitzustellen, welche ebenfalls einen reduzierten Gehalt an bioziden Substanzen aufweisen. Technische Aufgabe war weiterhin, ein einfaches Verfahren zur Herstellung eines Lacksystemes bereitzustellen.

Der Gegenstand der vorliegenden Erfindung ist in den anhängenden Ansprüchen 1-8 definiert. Gegenstand der Erfindung ist ein Lacksystem gemäss Anspruch 1, welches ein bewuchshemmendes Metalloxid und eine pyrogene Kieselsäure enthält, wobei die pyrogene Kieselsäure

eine BET-Oberfläche von 150 bis 400 m$^2$/g,

eine Stampfdichte von 100 bis 300 g/l und

eine Verdickung von weniger als 500 mPas bei 25°C aufweist.

Pyrogene Kieselsäuren werden durch Flammenhydrolyse von Siliciumverbindungen hergestellt. Bei diesem Verfahren wird eine hydrolysierbare Siliciumverbindung in einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Bei diesem Prozess werden in der Regel Aggregate gebildet, die ein dreidimensionales Netzwerk bilden. Mehrere Aggregate können Agglomerate bilden. Eine so hergestellte pyrogene Kieselsäure wird als pyrogene, hydrophile Kieselsäure bezeichnet. Direkt aus dem Flammprozess erhaltene Kieselsäuren mit einer BET-Oberfläche von 150 bis 400 m$^2$/g weisen eine geringe Stampfdichte und eine hohe Verdickung in Lacken auf. So ist in der Regel die Stampfdichte bei ca. 40 bis 60 g/l und die Verdickung bei mehr als 2500 mPas bei 25°C. Diese pyrogene Kieselsäure eignet sich nicht für die vorliegende Erfindung. Die in der vorliegenden Erfindung vorliegende Kieselsäure weist eine hohe Stampfdichte bei niedriger Verdickung auf.

In einer bevorzugten Ausführungsform beträgt die BET-Oberfläche 180 bis 330 m$^2$/g, die Stampfdichte 150 bis 250 g/l und die Verdickung 250 bis 400 mPas bei 25°C.

Die Kieselsäure der bevorzugten Ausführungsform kann beispielsweise hergestellt werden, indem man die oben beschriebene, direkt aus dem Flammprozess erhaltene Kieselsäure vermahlt.

Die im Lacksystem vorliegende pyrogene Kieselsäure kann auch eine hydrophobierte Kieselsäure sein. Sie kann hergestellt werden, indem man eine hydrophile Kieselsäure, wie sie aus dem Flammprozess erhalten wird, mit einem Hydrophobierungsmittel zur Reaktion bringt und nachfolgend vermahlt. Als Hydrophobierungsmittel kommen hauptsächlich Organosilane, Halogenorganosilane, Silazane oder Polysiloxane in Frage. Bevorzugt kommen Dimethyldichlorsilan, Octyltrimethoxysilan, Octyltriethoxysilan, Hexamethyldisilazan, Hexadecyltrimethoxysilan, Hexadecyltriethoxysilan und Dimethylpolysiloxan zum Einsatz. Je nach eingesetztem Hydrophobierungsmittel und dessen Menge verbleibt ein Kohlenstoffgehalt von 1 bis 10 Gew.-% auf der hydrophobierten Kieselsäure. Auch diese hydrophobierte Kieselsäure wird nachfolgend vermahlen.

In beiden Fällen, der hydrophilen und der hydrophoben Kieselsäure, ist zur Vermahlung ein spezifischer Energieeintrag von 200 bis 2000 kJ/kg, bevorzugt 500 bis 1800 kJ/kg, ganz besonders bevorzugt 700 bis 1500 kJ/kg, erforderlich. Der spezifische Energieeintrag berechnet sich nach: Spezifischer Energieeintrag = $(P_D - P_{D,0}) \times t/m$, mit

$P_D$ = gesamte eingetragene Leistung, $P_{D,0}$ = Leerlaufleistung, t = Zeit des Energieeintrages, m = Masse der eingesetzten Kieselsäure.

Der Energieeintrag erfolgt am besten mit einem Aggregat mit einer Leistung von wenigstens 1 kW, bevorzugt 1 bis 20 kW, besonders bevorzugt 2 bis 10 kW. Besonders bevorzugt ist der Einsatz einer Rotorkugelmühle. Die Mahlkugeln sind bevorzugt aus Stahl. Bei Einsatz einer Rotorkugelmühle bezieht sich $P_D$ auf die gesamte, eingetragene Leistung, d.h. inklusive Kieselsäure und Mahlkugeln. $P_{D,0}$ beschreibt die Leerlaufleistung, d.h. ohne Kieselsäure und Mahlkugeln. Das Füllvolumen der pyrogenen Kieselsäure in der Rotorkugelmühle beträgt bevorzugt 10 bis 80 Vol.-%, bevorzugt 20 bis 50 Vol.-%, jeweils bezogen auf das Volumen der Rotorkugelmühle. Die Dauer des Vermahlens beträgt bevorzugt 0,1 bis 120 Minuten, besonders bevorzugt 0,2 bis 60 Minuten, ganz besonders bevorzugt 0,5 bis 10 Minuten. Bei der Vermahlung kann Wasser, bis zu 3 Gew.-%, bezogen auf die Kieselsäuremenge, zugesetzt werden.

Es hat sich gezeigt, dass sich durch diesen Behandlungsschritt die Aggregatstrukturen und Aggregatdimensionen verändern. Der maximale Aggregatdurchmesser einer solchen vermahlenen Kieselsäure liegt nur mehr bei in der Regel 100 bis 200 nm. Darüberhinaus ist der Verzweigungsgrad und die Anzahl der Primärpartikel pro Aggregat reduziert.

Die Tabelle zeigt die Daten einer Bildanalyse für ca. 2000 Aggregate nach ASTM D 3849 für die im erfindungsgemäßen Lacksystem besonders geeignete Kieselsäure, nach Vermahlung, im Vergleich zur nicht vermahlenen Kieselsäure.

**Tabelle:** Aggregatstruktur und -dimensionen vor/nach Vermahlung

| | | Kieselsäure vor Vermahlung | Kieselsäure nach Vermahlung |
|---|---|---|---|
| Fläche | $nm^2$ | 41111 | 13417 |
| Umfang | nm | 3002 | 947 |
| konvexer Umfang | nm | 1056 | 446 |
| minimaler Durchmesser | nm | 244 | 107 |
| Maximaler Durchmesser | nm | 393 | 167 |
| Leerfläche | % | 26 | 38 |
| Verzweigungsgrad | | 13,2 | 5,29 |
| Anzahl Primärpartikel/Aggregat | | 584 | 167 |
| Aggregate Kreisförmig | % | 0,09 | 0,34 |
| Elipsoid | % | 4,23 | 30,3 |
| Linear | % | 22,2 | 41,1 |
| Verzweigt | % | 72,6 | 28,0 |

Die BET-Oberfläche wird bestimmt nach DIN ISO 99277 und die Stampfdichte nach DIN EN ISO 787/11.

Die Verdickung, in mPas, wird bestimmt in einer Dispersion des Siliciumdioxidpulvers in einem ungesättigten Polyesterharz, wie Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3-oder 1,4-Butandiol oder neo-Pentylglykol $((CH_3)_2C(CH_2OH)_2)$, oder Polyole, wie Pentaerythrit, bevorzugt gelöst zu 30 bis 80 Gew.%, bevorzugt 60 bis 70 Gew.%, in einem olefinischen Reaktivverdünner als Lösemittel, wie zum Beispiel Monostyrol. Die Viskosität des Polyesterharzes beträgt 1300 +/- 100 mPas bei einer Temperatur von 22°C. 7,5 g Siliciumdioxidpulver werden zu 142,5 g Polyesterharzes bei einer Temperatur von 22°C eingebracht und mittels eines Dissolvers bei 3000 min$^{-1}$ dispergiert. 60 g dieser Dispersion werden mit weiteren 90 g des ungesättigten Polyesterharzes versetzt und der Dispergiervorgang wird wiederholt. Als Verdickung wird der Viskositätswert in mPas der Dispersion bei 25°C, gemessen mit einem Rotationsviskosimeter bei einer Scherrate von 2,7 s$^{-1}$, bezeichnet. Geeignet als ungesättigtes Polyesterharz ist beispielsweise Ludopal® P6, BASF.

Die zweite wesentliche Komponente des erfindungsgemäßen Lacksystemes ist ein bewuchshemmendes Metalloxid. Unter bewuchshemmend ist zu verstehen, dass dieses Metalloxid in der Lage ist, eine Oberflächenbesiedelung durch Tiere, inklusive Mikroorganismen, und Pflanzen auf Objekten, auf die die Partikel durch Beschichtung eingebracht sind, zu verzögern, einzudämmen oder zu verhindern, insbesondere bei Objekten, welche mit Wasser, insbesondere Meerwasser, in Kontakt stehen.

Das bewuchshemmende Metalloxid wird bevorzugt aus der Gruppe bestehend aus Kupferoxid, Titandioxid, Eisenoxid, Manganoxid, Vanadiumoxid, Zinnoxid und Zinkoxid ausgewählt. Es ist auch möglich, dass das Lacksystem mehrere dieser bewuchshemmenden Metalloxide enthält. Die besten Ergebnisse zeigt ein Lacksystem, dessen Hauptbestandteil des bewuchshemmenden Metalloxides Kupfer-(I)-oxid ist.

Das bewuchshemmende Metalloxid liegt bevorzugt in sphärischer und/oder sphäroider Form vor und weist einen mittleren Partikeldurchmesser von 1 bis 20 μm auf. Es können jedoch auch andere Formen eingesetzt werden, wie beispielsweise nadelförmige Strukturen.

Die besten Ergebnisse werden erhalten, wenn der Durchmesser, oder im Falle nadelförmiger die Strukturen die längste Seite, des bewuchshemmenden Metalloxides größer sind als der mittlere Aggregatdurchmesser der pyrogenen Kieselsäure. Besonders bevorzugt ist ein Verhältnis der Durchmesser 10 bis 1000.

Der Anteil an bewuchshemmendem Metalloxid kann über weite Grenzen variiert werden. Bevorzugt weist das Lacksystem 0,5 bis 60 Gew.-% an bewuchshemmendem Metalloxid auf.

Auch der Anteil an pyrogener Kieselsäure im Lacksystem kann über weite Grenzen variiert werden. Es wurde jedoch gefunden, dass das Lacksystem dann die besten bewuchshemmenden Eigenschaften zeigt, wenn der Anteil an pyrogener Kieselsäure mindestens 3 Gew.-%, besser mindestens 5 Gew.-%, bezogen auf das Lacksystem aufweist. Besonders bevorzugt ist ein Bereich von 5 bis 40 Gew.-%. Solch hohe Anteile können mit gewöhnlicher pyrogener Kieselsäure wie sie aus dem Flammprozess aufgrund deren stark verdickender Wirkung nicht erzielt werden.

SEM-Aufnahmen eines Modell-Lacksystemes, welches $Cu_2O$-Partikel und eine pyrogene, vermahlene Kieselsäure enthält, zeigen, dass die Oberfläche der $Cu_2O$-Partikel dicht von feinteiliger, pyrogener Kieselsäure belegt ist. Dabei handelt es sich nicht wie im Stand der Technik beschrieben um Kern-Hülle-Strukturen, bei denen die Hülle fest an den Kern gebunden ist. Im vorliegenden Fall ist eher von elektrostatischen Wechselwirkungen auszugehen.

In der Regel enthält das erfindungsgemäße Lacksystem noch filmbildende Harze. Geeignete Polymere hierfür sind Acrylate, Silikonharze, Polyester, Polyurethane und auf Naturstoffen basierende Harze. Bevorzugt enthält das Lacksystem quellbare oder wasserlösliche Harze, um eine Freisetzung der bewuchshemmenden Metalloxide zu erleichtern. Quellbare oder wasserlösliche Harze können Silylacrylate oder Silylmethacrylate , wie Tributylsilylacrylat, Triphenylsilylacrylat, Phenyldimthysilylacrylat, Diphenylmethysilylacrylat, Trimethylsilylacrylat, Triisopropylsilylacrylat, oder die korrespondierenden Methacrylate oder Metallacrylate. Auch Kolophonium-basierte Harze können Bestandteil des erfindungsgemäßen Lacksystemes sein.

Ein weiterer Gegenstand der Erfindung ist ein mit dem Lacksystem beschichtetes Substrat. Prinzipiell sind alle Substrate geeignet, beispielsweise solche aus Metall, Kunststoff oder Glasfaser. Die Beschichtung kann mittels bekannter Verfahren wie Tauchen, Streichen, Sprühen oder Rakeln aufgebracht werden.

Ein weiterer Gegenstand der Erfindung ist die Verwendung des Lacksystemes für die Beschichtung des aquatischen Bereiches eines Sportbootes, eines kommerziellen Schiffes, eines in Wasser eintauchenden Bauwerkes, wie Bootsstege, Kaimauern, Ölbohrplattformen, Fahrwassermarkierungen oder Messsonden.

Die vorliegende Erfindung erlaubt die Herstellung eines Lacksystemes mit einer bewuchshemmenden Komponente und einer speziellen, pyrogenen Kieselsäure mit hoher Stampfdichte und niedriger Verdickung. Zur Herstellung werden die Komponenten bei niedrigem Energieeintrag in die Lackmatrix eingerührt, beispielsweise mittels eines Dissolvers. Hohe Energieeinträge wie im Stand der Technik beschrieben sind nicht nötig.

**Beispiele**

Tabelle 1: Einsatzstoffe

| Kieselsäure | | 1 | 2 |
|---|---|---|---|
| BET-Oberfläche | $m^2/g$ | 209 | 184 |
| Stampfdichte | g/l | 133 | 182 |
| Verdickung (25°C) | mPas | 330 | 290 |
| Kohlenstoffgehalt | Gew.-% | 0 | 1,2 |

Einbringen von Kieselsäure und Kupfer(I)-oxid in einen Kolophonium-Lack ohne bewuchshemmendes Metalloxid: Vorlage von 350g Kolophonium-Lack in PE-Becher. Zugabe von 10 - 25 % Xylol. Unter Rühren mittels Dissolver (Scheibe ∅ 50mm) Zugabe von Kieselsäure 1 bzw.Kieselsäure 2. 15 min Dispergieren mittels Dissolver, (Scheibe ∅ 50mm, 3500UpM) Anschließend in Perlmühle: 1400g Ce-stabilisierte Zirkonoxidperlen, 2-3mm, 15 Minuten, 2000 UpM, 3-fach Mahlscheibe, Zugabe von Kupfer(I)-oxid. 5 min dispergieren bei 2000 UpM mit 3-fach Mahlscheibe, danach Absieben der Perlen.

Applikation per Hand mittels Farbroller (kurzflorige (4mm) Lackier-Velour-Walze, 10 cm Breite) auf angeschliffene PVC-Prüfplatten (20x20 cm); 100μm Trockenschichtdicke

Tabelle 2: Zusammensetzung der Lacke und Bewertung

| Beispiel | | 1 | 2 | 3 |
|---|---|---|---|---|
| Kieselsäure 1 | Gew.-% | 0 | 10 | 0 |
| Kieselsäure 2 | Gew-% | 0 | 0 | 10 |
| $Cu_2O$ | Gew.-% | 5 | 5 | 5 |
| Fouling Rating [1] | | 69 | 100 | 100 |
| 1) Bewuchsbedeckung nach ASTM 6990-03 nach 3 Monaten Bewitterung in der Nordsee Norderney (100: perfect, 0% failure; 0: complete failure) | | | | |

**Patentansprüche**

1. Lacksystem **dadurch gekennzeichnet, dass**
   es ein bewuchshemmendes Metalloxid und eine pyrogene Kieselsäure enthält, wobei die pyrogene Kieselsäure eine BET-Oberfläche von 150 bis 400 $m^2$/g, bestimmt nach DIN ISO 99277,
   eine Stampfdichte von 100 bis 300 g/l, bestimmt nach DIN EN ISO 787/11 und
   eine Verdickung von weniger als 500 mPas bei 25°C, gemessen gemäß der Beschreibung, aufweist, und wobei die pyrogene Kieselsäure erhältlich ist nach Vermahlung mit einem spezifischen Energieeintrag von 200 bis 2000 kJ/kg, bevorzugt 500 bis 1800 kJ/kg, ganz besonders bevorzugt 700 bis 1500 kJ/kg, berechnet gemäß

$$\text{Spezifischer Energieeintrag} = (P_D - P_{D,0}) \times t / m,$$

   mit $P_D$ = gesamte eingetragene Leistung,
   $P_{D,0}$ = Leerlaufleistung,
   t = Zeit des Energieeintrages,
   m = Masse der eingesetzten Kieselsäure.

2. Lacksystem nach Anspruch 1, **dadurch gekennzeichnet, dass**
   das bewuchshemmende Metalloxid aus der Gruppe bestehend aus Kupferoxid, Titandioxid, Eisenoxid, Manganoxid, Vanadiumoxid, Zinnoxid und Zinkoxid ausgewählt ist.

3. Lacksystem nach den Ansprüchen 1 oder 2, **dadurch gekennzeichnet, dass** der Anteil an bewuchshemmendem Metalloxid 0,5 bis 60 Gew.-% bezogen auf das Lacksystem ist.

4. Lacksystem nach den Ansprüchen 1 bis 3, **dadurch gekennzeichnet, dass** der Anteil an pyrogener Kieselsäure 5 bis 40 Gew.-%, bezogen auf das Lacksystem ist.

5. Lacksystem nach einem der vorgenannten Ansprüche, **dadurch gekennzeichnet, dass** es sich bei den pyrogenen Kieselsäuren um hydrophile oder hydrophobe Kieselsäuren handelt.

6. Lacksystem nach den Ansprüchen 1 bis 4, **dadurch gekennzeichnet, dass** es filmbildende Harze enthält.

7. Mit dem Lacksystem gemäß der Ansprüche 1 bis 6 beschichtetes Substrat.

8. Verwendung des Lacksystems gemäß der Ansprüche 1 bis 6 für die Beschichtung des aquatischen Bereiches eines Sportbootes, eines kommerziellen Schiffes, eines in Wasser eintauchenden Bauwerkes.

**Claims**

1. Paint system, **characterized in that**
   it comprises an anti-fouling metal oxide and a fumed silica, where the fumed silica has

a BET surface area of 150 to 400 m$^2$/g, determined in accordance with DIN ISO 99277,
a tamped density of 100 to 300 g/l, determined in accordance with DIN EN ISO 787/11, and
a thickening of less than 500 mPas at 25°C, measured in accordance with the description,
and wherein the fumed silica is obtainable after grinding with a specific energy input of 200 to 2000 kJ/kg, preferably
500 to 1800 kJ/kg, most preferably 700 to 1500 kJ/kg, calculated as follows:

```
specific energy input = (P_D - P_D,0) × t / m,
```

with $P_D$ = total power input,
$P_{D,0}$ = no-load power,
t = energy input time,
m = mass of silica used.

2.  Paint system according to Claim 1, **characterized in that**
    the anti-fouling metal oxide is selected from the group consisting of copper oxide, titanium dioxide, iron oxide,
    manganese oxide, vanadium oxide, tin oxide and zinc oxide.

3.  Paint system according to Claim 1 or 2, **characterized in that** the proportion of anti-fouling metal oxide is 0.5% to
    60% by weight, based on the paint system.

4.  Paint system according to Claims 1 to 3, **characterized in that**
    the proportion of fumed silica is 5% to 40% by weight, based on the paint system.

5.  Paint system according to any of the preceding claims, **characterized in that** the fumed silica is hydrophilic or
    hydrophobic silica.

6.  Paint system according to Claims 1 to 4, **characterized in that** it contains film-forming resins.

7.  Substrate coated with the paint system according to Claims 1 to 6.

8.  Use of the paint system according to Claims 1 to 6 for the coating of the aquatic region of a watersports boat, a
    commercial ship or a built structure immersed in water.

**Revendications**

1.  Système de peinture, **caractérisé en ce qu'**il contient un oxyde métallique antisalissure et une silice pyrogénée,
    la silice pyrogénée présentant une surface BET de 150 à 400 m$^2$/g, déterminée selon DIN ISO 99277,
    une masse volumique après tassement de 100 à 300 g/l, déterminée selon DIN EN ISO 787/11 et
    un épaississement de moins de 500 mPa.s à 25 °C, mesuré conformément à la description,
    et la silice pyrogénée pouvant être obtenue après broyage avec un apport d'énergie spécifique de 200 à 2 000
    kJ/kg, de préférence 500 à 1 800 kJ/kg, de façon tout particulièrement préférée 700 à 1 500 kJ/kg, calculé selon

```
apport d'énergie spécifique = (P_D - P_D,0) x t/m,
```

où $P_D$ = puissance fournie totale,
$P_{D,0}$ = puissance à vide,
t = durée de l'apport d'énergie,
m = masse de la silice utilisée.

2.  Système de peinture selon la revendication 1, **caractérisé en ce que**
    l'oxyde métallique antisalissure est choisi dans le groupe constitué par l'oxyde de cuivre, le dioxyde de titane, l'oxyde
    de fer, l'oxyde de manganèse, l'oxyde de vanadium, l'oxyde d'étain et l'oxyde de zinc.

3.  Système de peinture selon l'une quelconque des revendications 1 et 2, **caractérisé en ce que** la proportion de l'oxyde métallique antisalissure vaut de 0,5 à 60 % en poids, par rapport au système de peinture.

4. Système de peinture selon les revendications 1 à 3, **caractérisé en ce que** la proportion de silice pyrogénée vaut de 5 à 40 % en poids, par rapport au système de peinture.

5. Système de peinture selon l'une quelconque des revendications précédentes, **caractérisé en ce que** pour ce qui est des silices pyrogénées il s'agit de silices hydrophiles ou hydrophobes.

6. Système de peinture selon les revendications 1 à 4, **caractérisé en ce qu'**il contient des résines filmogènes.

7. Subjectile revêtu avec le système de peinture selon les revendications 1 à 6.

8. Utilisation du système de peinture selon les revendications 1 à 6 pour le revêtement de la zone aquatique d'un bateau de plaisance, d'un navire commercial, d'un ouvrage destiné à être immergé dans l'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7147921 B
- WO 2013036746 A
- WO 2014187769 A